# EUROPÄISCHE PATENTSCHRIFT

(11) **EP 2 812 140 B1**
(45) Veröffentlichungstag und Bekanntmachung des Hinweises auf die Patenterteilung: **26.04.2017**
(21) Anmeldenummer: 13708128.7
(22) Anmeldetag: 05.03.2013
(51) Int. Cl.: B23B 3/26, B24B 39/04

(54) **DREH- UND/ODER ROLLIERMASCHINE**
TURNING AND/OR ROLLER BURNISHING MACHINE
MACHINE DE FAÇONNAGE AU TOUR ET/OU DE GALETAGE

(30) Priorität: 07.05.2012 DE 102012009052
(43) Veröffentlichungstag der Anmeldung: 17.12.2014
(73) Patentinhaber: Siemens Aktiengesellschaft, 80333 München (DE)
(72) Erfinder: GÜHNEMANN, Christian, 46562 Voerde (DE); SCHÄFFER, Karsten, 46045 Oberhausen (DE); VOGT, Felix, 46119 Oberhausen (DE)
(86) Internationale Anmeldenummer: PCT/EP2013/054306
(87) Internationale Veröffentlichungsnummer: WO 2013/167293

(56) Entgegenhaltungen:
- US-A- 5 189 933
- US-A- 5 660 093

## Beschreibung

Die vorliegende Erfindung betrifft eine Dreh- und/oder Rolliermaschine gemäß dem Oberbegriff von Anspruch 1.

Derartige Werkzeugmaschinen sind im Stand der Technik in unterschiedlichsten Ausgestaltungen bekannt und dienen zur Herstellung oder Bearbeitung von im Wesentlichen rotationssymmetrischen Bauteilen. Das Drehen ist ein spanabhebendes Fertigungsverfahren, bei dem die Schnittbewegung durch Rotation des zu bearbeitenden Bauteils erzeugt, während der Drehmeißel fest am Werkzeugschlitten gespannt ist und den Span abnimmt, indem der Werkzeugschlitten längs und quer zur Rotationsachse des Bauteils entlang der zu zerspanenden Oberfläche bewegt wird. Beim Rollieren handelt es sich um ein spanloses Bearbeitungsverfahren, bei dem das Rollierwerkzeug, bei dem es sich normalerweise um einen Wälzkörper handelt, zur Bauteilglättung und/oder -verfestigung derart gegen die Oberfläche eines rotierenden Bauteil gedrückt wird, dass das Material des Bauteils zu fließen beginnt.

Insbesondere bei der hochpräzisen Bearbeitung sehr großer Bauteile mit hohem Eigengewicht, wie beispielsweise bei der Bearbeitung eines Zugankers einer in der Kraftwerkstechnik eingesetzten Gasturbine, werden an die zum Einsatz kommenden Werkzeugmaschinen sehr hohe Anforderungen gestellt. Hierbei bereitet insbesondere das ordnungsgemäße Spannen der großformatigen Bauteile Probleme. Zudem geht die für die Bearbeitung erforderliche Rotation solcher Bauteile mit einem erheblichen Energieaufwand einher. Ein weiterer Nachteil besteht in den großen Abmessungen der zum Einsatz kommenden Werkzeugmaschinen, die einen großen Bauraum einnehmen, weshalb sich die Maschinen nicht ohne weiteres transportieren lassen. Entsprechend ist eine örtlich flexible Bearbeitung, wie beispielsweise direkt im Kraftwerk, normalerweise nicht möglich oder zumindest nicht wirtschaftlich. Dies ist insbesondere dann nachteilig, wenn Dreh- und/oder Rollierbearbeitungen im Rahmen einer Wartung der Gasturbine durchgeführt werden müssen.

Örtlich flexibel einsetzbare Werkzeugmaschinen sind in der US 5,660,093 und in der US 4,739,685 beschrieben. Jedoch erreichen diese nicht die erforderliche Präzision oder lassen sich nicht derart an dem zu bearbeitenden Bauteil befestigen, dass das Rollierwerkzeug den zu bearbeitenden Abschnitt des Bauteils erreicht.

Ausgehend von diesem Stand der Technik ist es eine Aufgabe der vorliegenden Erfindung, eine Dreh- und/oder Rolliermaschine der eingangs genannten Art bereitzustellen, die eine hochpräzise und flexiblere Bearbeitung ermöglicht Zur Lösung dieser Aufgabe schafft die vorliegende Erfindung eine Dreh- und/oder Rolliermaschine der eingangs genannten Art, bei der an dem Längsschlitten anstatt dem Querschlitten ein das Basisteil übergreifender Arm bewegbar angeordnet ist, wobei an der freien Endseite des Arms der Querschlitten angeordnet ist, an dem der Werkzeughalter aufgenommen ist.
Die Bearbeitung eines Bauteils erfolgt bei der erfindungsgemäßen Dreh- und/oder Rolliermaschine somit bei stillstehendem Werkstück, wobei das in dem Werkzeughalter gehaltene Bearbeitungswerkzeug um das Bauteil rotiert wird. Dank dieser Bauform kann die erfindungsgemäße Dreh- und/oder Rolliermaschine wesentlich kleiner und leichter als herkömmliche Werkzeugmaschinen ausgeführt werden, so dass sie problemlos transportabel und somit örtlich flexibel einsetzbar ist. Auch ist der für die Bearbeitung großer und schwerer Bauteile erforderliche Energieaufwand geringer, da nicht das Bauteil sondern das wesentlich leichtere, das Bearbeitungswerkzeug aufweisende Maschinenteil während der Bearbeitung rotiert wird.

Ist das Basisteil gemäß einer bevorzugten Bauart der erfindungsgemäßen Dreh- und/oder Rolliermaschine derart ausgelegt, dass es zur Bearbeitung eines Bauteils ortsfest an diesem montierbar ist, so kann die Maschine noch kleiner und leichter ausgeführt werden, da die Notwendigkeit eines Maschinenbetts und sonstiger Aufbauten entfällt. Die Dreh- und/oder Rolliermaschine wird dann während der Bearbeitung durch das zu bearbeitende Bauteil gestützt und gehalten.

Gemäß einer Ausgestaltung der vorliegenden Erfindung weist das Basisteil Befestigungsmittel auf, die derart ausgelegt sind, dass das Basisteil an einem zu bearbeitenden Werkstück ortsfest montierbar ist.

Gemäß einer Variante ist das Basisteil ringförmig ausgebildet, wobei die Befestigungsmittel gleichmäßig entlang des Ringdurchmessers angeordnet sind. Auf diese Weise wird eine sehr gleichmäßige Befestigung des Basisteils an dem zu bearbeitenden Bauteil gewährleistet.

Vorteilhaft weist der Werkzeughalter ein zweites ortsfest montierbares Basisteil auf, das insbesondere analog zum ersten Basisteil ausgebildet ist, wobei das Rotationsteil zwischen den beiden Basisteilen relativ zu diesen um die zentrale Achse drehbar gehalten ist. Die Anordnung von zwei Basisteilen mit dazwischen angeordnetem Rotationsteil ist dahingehend von Vorteil, dass die Dreh- und/oder Rolliermaschine eine sehr hohe Steifigkeit erhält.

Gemäß einer Ausgestaltung der vorliegenden Erfindung weist das Rotationsteil zwei Gleitringe, die über Führungselemente jeweils mit einem Basisteil verbunden sind, und ein die beiden Gleitringe miteinander verbindendes, trommelartig ausgebildetes Zwischenteil auf. Durch die Verwendung eines trommelartig ausgebildeten Zwischenteils wird die Steifigkeit der Maschine noch weiter verbessert.

Bevorzugt ist das Zwischenteil zumindest teilweise als Rahmen ausgebildet. So kann das Zwischenteil beispielsweise mehrere Streben aufweisen, die sich zwischen den beiden Basisteilen erstrecken. Gegebenenfalls können auch quer verlaufende Zwischenstreben zur Versteifung der Anordnung vorgesehen sein.

Eine solche rahmenartige Ausbildung hat den Vorteil, dass der durch das trommelartig ausgebildete Zwischenteil definierte Hohlraum für das Bedienpersonal einsehbar und zugänglich ist. Darüber hinaus kann bei der Herstellung des Zwischenteils Material eingespart werden.

Das Rotationsteil und das Basisteil bzw. die Basisteile sind gemäß einer Ausgestaltung der vorliegenden Erfindung geteilt ausgebildet, wobei sich die Teilungsebene parallel zur zentralen Achse erstreckt oder die zentrale Achse einschließt. Eine derart geteilte Ausbildung ist dahingehend von Vorteil, dass die Maschine einfacher an einem zu bearbeitenden Bauteil befestigt werden kann. Darüber hinaus kann sie im zerlegten Zustand besser und platzsparender transportiert werden.

Der Antrieb ist bevorzugt an dem Basisteil angeordnet und treibt das Rotationsteil über ein in eine rotationsteilseitige Verzahnung eingreifendes Ritzel an. Diese Ausgestaltung hat den Vorteil, dass der Antrieb während der Bauteilbearbeitung nicht rotiert und entsprechend keine Fliehkräfte erzeugt, die sich negativ auf das Bearbeitungsergebnis auswirken können.

Vorteilhaft ist der Antrieb ein Druckluftantrieb, da Druckluft in fast allen Industrieumgebungen zur Verfügung steht.

Gemäß einer Ausgestaltung der vorliegenden Erfindung sind an dem Rotationsteil ein parallel zur zentralen Achse geführt bewegbarer Längsschlitten und ein quer zur zentralen Achse geführt bewegbarer Querschlitten derart vorgesehen, dass der Werkzeughalter parallel und/oder quer zur zentralen Achse bewegbar ist. Es sollte klar sein, dass sowohl der Längsschlitten als auch der Querschlitten bevorzugt motorisiert angetrieben werden.

Gemäß einer nicht erfindungsgemäßen Variante ist der Querschlitten an dem Längsschlitten bewegbar angeordnet, wobei an dem Querschlitten der Werkzeughalter aufgenommen ist. Entsprechend ist der Querschlitten im Bereich des Verfahrweges des Längsschlittens verfahrbar, so dass eine Bauteilbearbeitung im vom Längsschlitten abgedeckten Bereich durchgeführt werden kann, die nachfolgend auch als interne Bearbeitung bezeichnet wird.

Gemäß der vorliegenden Erfindung ist an dem Längsschlitten ein das Basisteil übergreifender Arm bewegbar angeordnet, wobei an der freien Endseite des Arms der Querschlitten angeordnet ist, an dem der Werkzeughalter aufgenommen ist. Bei dieser Variante kann eine Bearbeitung des Bauteils außerhalb des Verfahrwegs des Längsschlittens erfolgen, die nachfolgend auch als externe Bearbeitung bezeichnet wird.
Die erfindungsgemäße Maschine ist vorteilhaft derart ausgelegt, dass diese für eine interne Bearbeitung und eine externe Bearbeitung umgerüstet werden kann.
Vorteilhaft ist der Längsschlitten verschwenkbar ausgebildet, insbesondere verschwenkbar um einen Winkel von 90°. In diesem Fall kann der Längsschlitten im Rahmen einer Umrüstung von einer internen Bearbeitung zu einer externen Bearbeitung oder umgekehrt verschwenkt werden. Eine derartige Verschwenkung kann in Bezug auf den maximalen Verfahrweg des Längsschlittens von Vorteil sein.
Ferner schafft die vorliegende Erfindung zur Lösung der eingangs genannten Aufgabe ein Verfahren zum Drehen und/oder Rollieren eines Bauteils unter Verwendung einer Dreh- und/oder Rolliermaschine der zuvor beschriebenen Art, bei dem die Dreh- und/oder Rolliermaschine ortsfest befestigt wird, insbesondere an einem zu bearbeitenden Bauteil, und ein Drehmeißel oder Rollierwerkzeug bei stillstehendem Bauteil entlang einer Kreisbahn um eine zentrale Achse gedreht und somit um das Bauteil zwecks Materialabtrag bewegt wird.

Bevorzugt wird die Dreh- und/oder Rolliermaschine an der Außenumfangsfläche des zu bearbeitenden Bauteils befestigt.

Vorteilhaft werden die zentrale Achse und die Längsachse des Bauteils derart zueinander ausgerichtet, dass diese im Wesentlichen deckungsgleich sind. Eine derartige Ausrichtung kann beispielsweise unter Verwendung entsprechender Messuhren erfolgen, bis ein akzeptabler Rundlauf gewährleistet ist.

Vorteilhaft wird mit dem erfindungsgemäßen Verfahren ein Gasturbinenbauteil bearbeitet, insbesondere ein Zuganker einer Gasturbine, wobei es sich bei der Gasturbine insbesondere um eine solche handelt, die in der Kraftwerkstechnik eingesetzt wird.

Weitere Merkmale und Vorteile der vorliegenden Erfindung werden anhand der nachfolgenden Beschreibung eines Ausführungsbeispiels einer erfindungsgemäßen Dreh- und/oder Rolliermaschine unter Bezugnahme auf die beiliegende Zeichnung deutlich. Darin ist
- Figur 1: eine schematische perspektivische Ansicht einer an sich bekannten Dreh- und/oder Rolliermaschine, die an einem zu bearbeitenden Bauteil ortsfest montiert und für die Durchführung einer internen Bearbeitung gerüstet ist;
- Figur 2: eine perspektivische Darstellung einer ersten Maschinenhälfte der in Figur 1 dargestellten Dreh- und/oder Rolliermaschine;
- Figur 3: eine Explosionsansicht der in Figur 2 dargestellten ersten Maschinenhälfte;
- Figur 4: eine perspektivische Ansicht einer zweiten Maschinenhälfte der in Figur 1 dargestellten Dreh- und/oder Rolliermaschine;
- Figur 5: eine Explosionsansicht der in Figur 4 dargestellten zweiten Maschinenhälfte;
- Figur 6: eine perspektivische Teilansicht der in den Figuren 4 und 5 dargestellten zweiten Maschinenhälfte, die eine Längsführung, einen Längsschlitten, eine Querführung, einen Querschlitten und ein daran angeordnetes Werkzeug zeigt;
- Figur 7: eine Stirnseitenansicht der in Figur 1 dargestellten Dreh- und/oder Rolliermaschine, die eine interne Bearbeitung des Bauteils mit einer Anordnung gemäß Figur 6 zeigt.
- Figur 8: eine perspektivische Teilansicht entsprechend Figur 6, wobei zwischen dem Längsschlitten und der Querführung ein Erweiterungsteil angeordnet ist;
- Figur 9: eine Stirnseitenansicht analog zu Figur 7, welche die interne Bearbeitung des Bauteils mit einer Anordnung gemäß Figur 8 zeigt;
- Figur 10: eine schematische perspektivische Darstellung der in Figur 1 dargestellten Dreh- und/oder Rolliermaschine, die an einem Bauteil befestigt ist und erfindungsgemäß für eine externe Bauteilbearbeitung gerüstet ist;
- Figur 11: eine perspektivische Ansicht der in Figur 10 dargestellten Maschine, bei der ein Arm in einer ersten Stellung montiert ist;
- Figur 12: eine vergrößerte Ansicht des Ausschnitts XII in Figur 11;
- Figur 13: eine perspektivische Ansicht der in Figur 10 dargestellten Maschine, wobei der Arm in einer zweiten Stellung montiert ist;
- Figur 14: eine vergrößerte Ansicht des Ausschnitts XIV in Figur 13;
- Figur 15: eine Explosionsansicht des Arms.

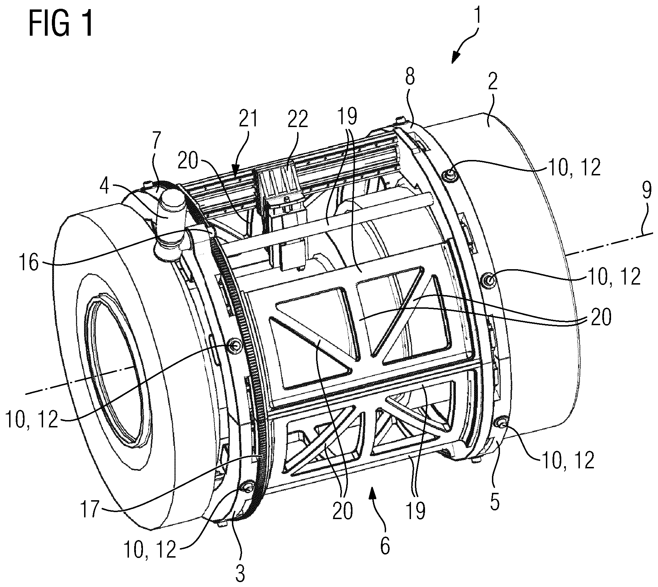

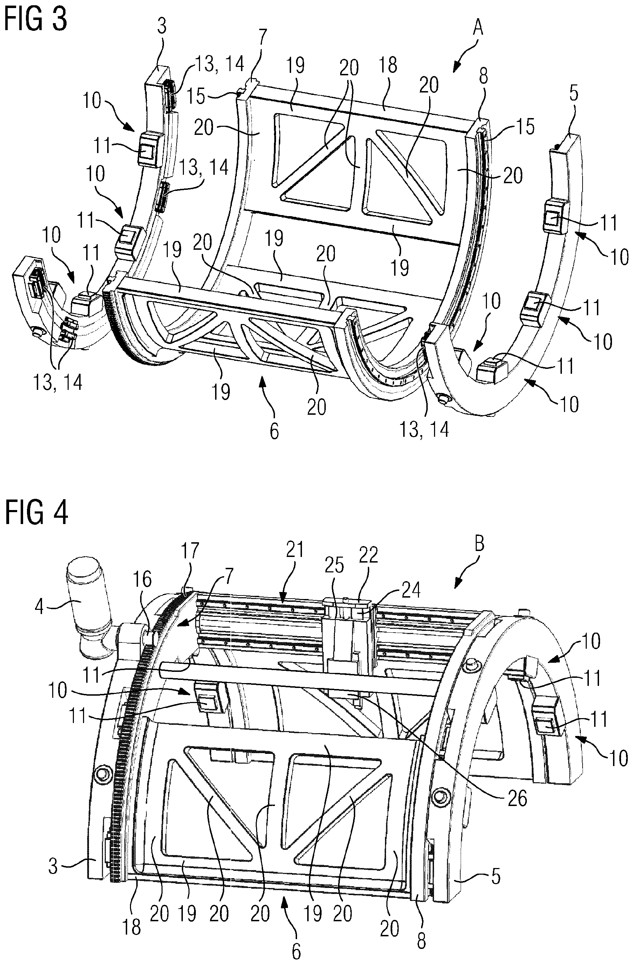

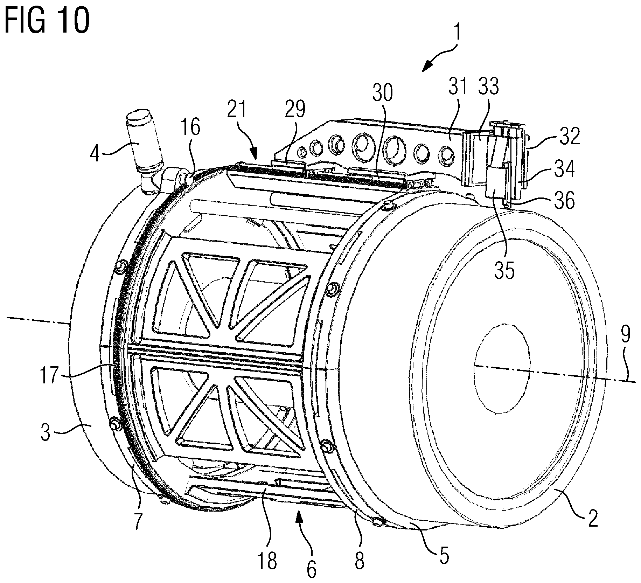

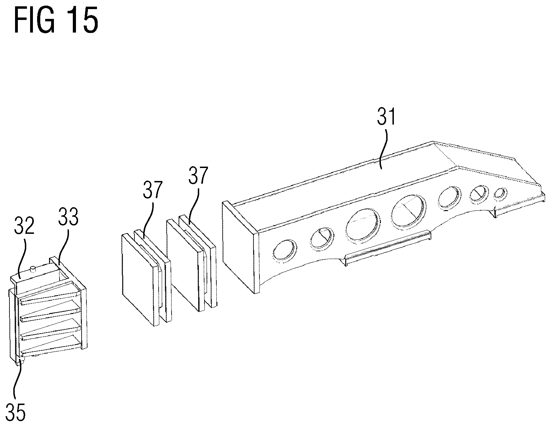

Die Figuren zeigen eine Dreh- und/oder Rolliermaschine 1, die an einem zu bearbeitenden, im Wesentlichen rotationssymmetrisch ausgebildeten Bauteil 2 montiert ist. Genauer gesagt zeigen die Figuren 1 bis 9 die Maschine 1 in einem Zustand, in dem diese für eine interne Bearbeitung des Bauteils 2 gerüstet ist, und die Figuren 10 bis 15 zeigen die Maschine 1 in einem Zustand gemäß einer Ausführungsform der vorliegenden Erfindung, in dem diese für eine externe Bauteilbearbeitung gerüstet ist, wie es nachfolgend noch näher erläutert wird.

Nachfolgend wird der Aufbau der Dreh- und/oder Rolliermaschine 1 zunächst unter Bezugnahme auf die Figuren 1 bis 9 beschrieben.

Die Dreh- und/oder Rolliermaschine 1 umfasst als Hauptbestandteile ein erstes Basisteil 3, einen an dem ersten Basisteil angeordneten Motor 4, ein zweites Basisteil 5 und ein Rotationsteil 6, das zwischen den Basisteilen 3 und 5 aufgenommen und über an diesem befestigte Gleitringe 7 und 8 derart mit diesen verbunden ist, dass es angetrieben durch den Motor 4 um eine zentrale Achse 9 relativ zu den Basisteilen 3 und 5 gedreht werden kann.

Die beiden Basisteile 3 und 5 weisen jeweils einen ringförmigen Aufbau auf. Jedes Basisteil 3, 5 umfasst mehrere Befestigungsmittel 10, die in gleichmäßigen Abständen entlang des Ringdurchmessers der Basisteile 3 und 5 angeordnet sind und jeweils ein radial einwärts vorstehendes Befestigungselement 11 aufweisen. Die Befestigungselemente 11 sind in radialer Richtung vor und zurück bewegbar, um die Basisteile 3 und 5 wahlweise an einem zu bearbeitenden Bauteil 2 festzulegen oder von diesem zu lösen. Die Bewegung der Befestigungselemente 11 erfolgt vorliegend manuell über nicht näher dargestellte Schraubmechanismen, die von einem Bediener durch Drehen von an der Außenumfangsfläche der Basisteile 3 und 5 vorgesehenen Stellschrauben 12 unter Verwendung eines entsprechenden Werkzeugs betätigbar sind. Es können mehrere Sätze von Befestigungselementen 11 unterschiedlicher Länge vorgesehen sein, die jeweils speziell für unterschiedliche Außendurchmesserbereiche eines zu bearbeitenden Bauteils 2 ausgelegt sind. Auf diese Weise kann eine stabile Befestigung über einen insgesamt sehr großen Außendurchmesserbereich gewährleistet werden.

An den zum Rotationsteil 6 weisenden Fläche jedes Basisteils 3, 5 sind ringsegmentartig ausgebildete Führungselemente 13 vorgesehen, die gleichmäßig voneinander beabstandet angeordnet sind und jeweils eine schwalbenschwanzförmige Ringsegmentnut 14 aufweisen. Diese Ringsegmentnuten 14 der Basisteile 3 und 5 sind mit zugeordneten schwalbenschwanzförmigen Ringführungen 15 in Eingriff, die an den Gleitringen 7 und 8 vorgesehen sind und in Richtung der Basisteile 3 und 5 auswärts vorstehen. Entsprechend ist das Rotationsteil 6 über die Gleitringe 7 und 8 mit den Basisteilen 3 und 5 verbunden und kann relativ zu diesen um die zentrale Achse 9 gedreht werden.

Der Motor 4 ist fest mit dem ersten Basisteil 3 verbunden und umfasst ein Ritzel 16, das mit einer rotationsteilseitigen umlaufenden Verzahnung 17 in Eingriff ist. Genauer gesagt ist die Verzahnung 17 vorliegend am Außenumfang des Gleitrings 7 ausgebildet. Bei dem Motor 4 handelt es sich um einen Druckluftmotor, der an eine Druckluftversorgung anschließbar ist.

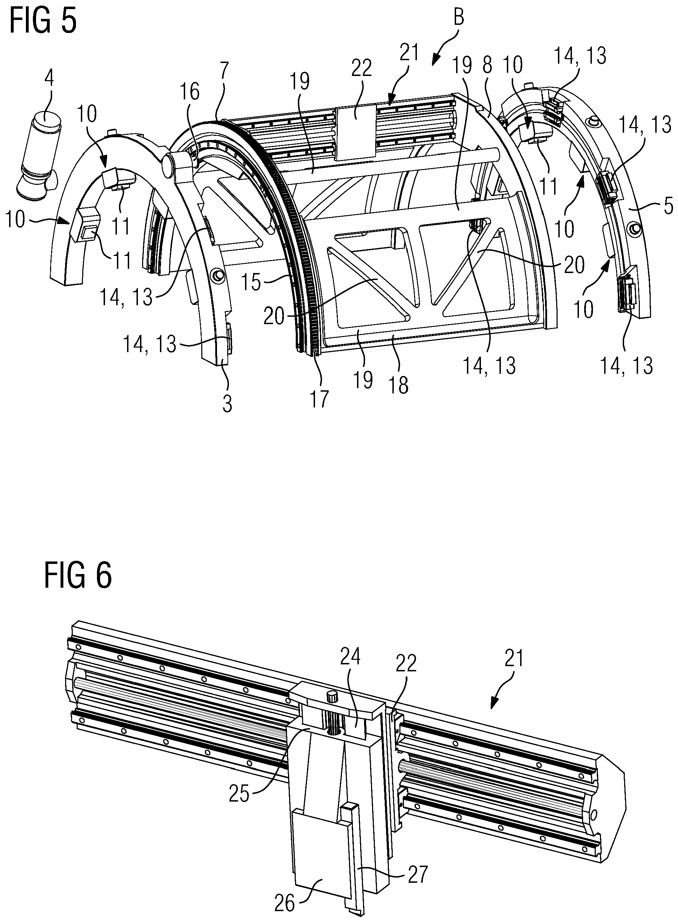

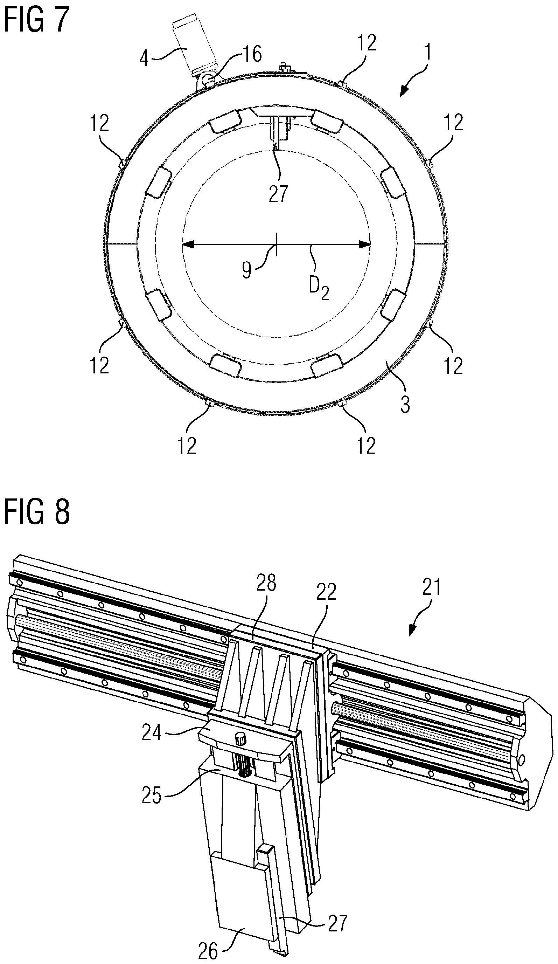

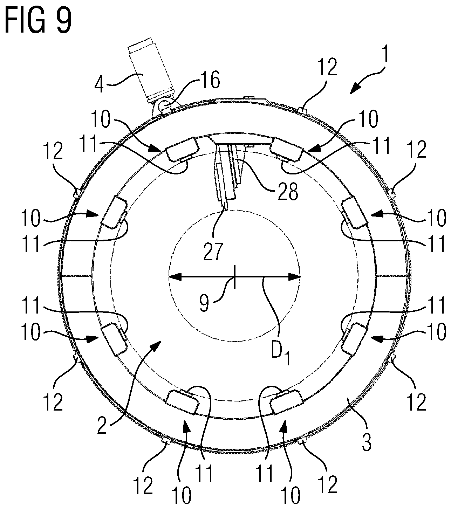

Ein Zwischenteil 18 des Rotationsteils 6, das die beiden Gleitringe 7 und 8 fest miteinander verbindet, ist rahmenartig ausgebildet und umfasst mehrere Längsstreben 19, mehrere diese versteifende Querstreben 20 und eine sich parallel zur zentralen Achse 9 erstreckende Längsführung 21, die um einen Winkel von 90° verschwenkbar und in ihren äußeren Schwenkstellungen arretierbar ist. An der in ihrer ersten Schwenkstellung arretierten Längsführung 21 ist ein Längsschlitten 22 unter Verwendung eines nicht näher dargestellten Motors verfahrbar gehalten. An dem Längsschlitten 22 ist eine sich quer zur zentralen Achse 9 erstreckende Querführung 24 befestigt, entlang der ein Querschlitten 25 über einen ebenfalls nicht näher dargestellten Motor bewegbar ist. An dem Querschlitten 25 ist ein Werkzeughalter 26 gehalten, der zur Aufnahme eines Werkzeugs 27 ausgelegt ist, bei dem es sich wahlweise um ein Drehwerkzeug oder ein Rollierwerkzeug handeln kann. Wie es in Figur 8 dargestellt ist, kann zwischen dem Längsschlitten 22 und dem Querschlitten 25 ein Zwischenstück 28 angeordnet werden, das derart ausgebildet ist, dass der Querschlitten 25 gegenüber der Darstellung in Figur 6 in einem geringeren Abstand zur zentralen Achse 9 angeordnet ist. Auf diese Weise kann der Bearbeitungsdurchmesser D am Bauteil 2 variiert werden, wie es in den Figuren 7 und 9 anhand der Bearbeitungsdurchmesser D₁ und D₂ dargestellt ist.

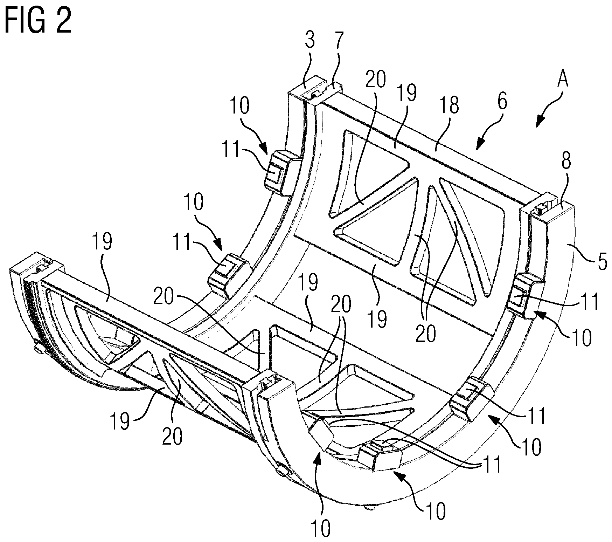

Wie es in den Figuren 2 bis 5 dargestellt ist, ist die Maschine 1 in zwei Maschinenhälften A und B unterteilt, wobei die Teilungsebene vorliegend die zentrale Achse 9 einschließt. Alternativ kann die Teilungsebene aber auch parallel zur zentralen Achse 9 angeordnet sein.

Die in den Figuren 1 bis 9 dargestellte Anordnung des Querschlittens 25 wird dann eingesetzt, wenn mit der Dreh- und/oder Rolliermaschine 1 ein Bauteilbereich bearbeitet werden soll, der zwischen den beiden Basisteilen 3 und 5 angeordnet ist, was im Rahmen der vorliegenden Anmeldung als interne Bearbeitung bezeichnet wird.

Die Figuren 10 bis 15 zeigen die Dreh- und/oder Rolliermaschine 1 in einem nachfolgend näher beschriebenen umgerüsteten Zustand, der zur Bearbeitung eines Bauteilbereiches eingesetzt wird, der von einem der Basisteile 3, 5 auswärts vorsteht, was im Rahmen der vorliegenden Anmeldung als externe Bearbeitung bezeichnet wird. In diesem umgerüsteten Zustand ist die Längsführung 21 in ihrer gegenüber der ersten Schwenkstellung um 90° gedrehten zweiten Schwenkstellung arretiert, so dass sie nach außen weist. An der Längsführung 21 sind zwei Längsschlitten 29 und 30 über einen nicht näher dargestellten Motor bewegbar gehalten, an denen ein Arm 31 befestigt ist, der das zweite Basisteil 5 übergreift. Am freien Ende des Arms 31 ist ein eine Querführung 32 aufnehmendes Endstück 33 angeordnet. An der Querführung 32 ist ein Querschlitten 34 bewegbar befestigt, der einen Werkzeughalter 35 trägt. In dem Werkzeughalter 35 ist ein Werkzeug 36 aufgenommen, bei dem es sich um ein Dreh- oder ein Rollierwerkzeug handeln kann. Zwischen dem Arm 31 und dem Endstück 33 sind zur Verlängerung des Arms 31 zwei Supportunterbauten 37 vorgesehen, die bedarfsweise entfernt oder durch weitere Supportunterbauten 37 ergänzt werden können.

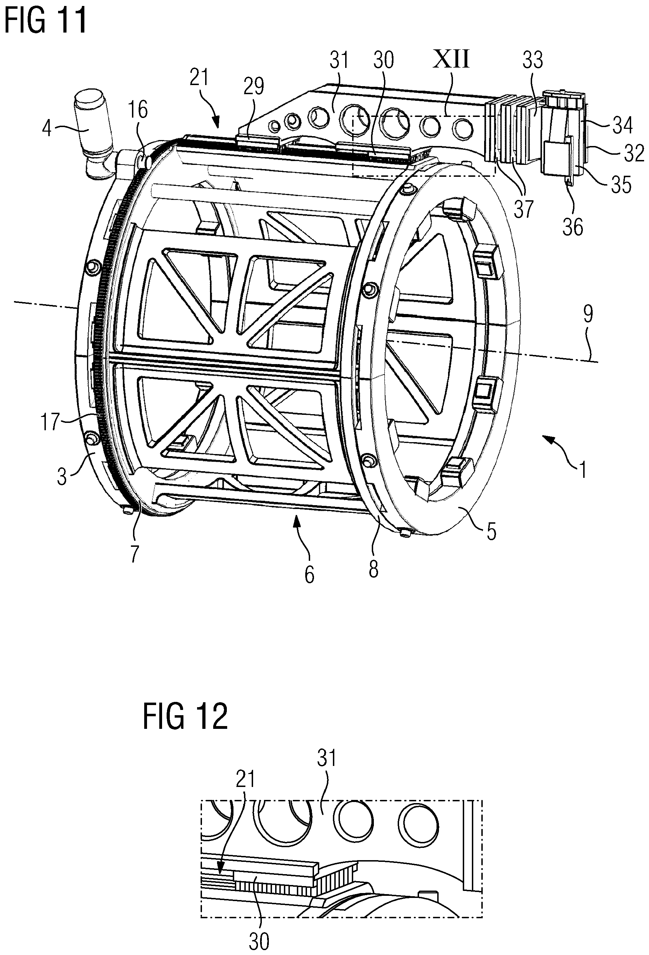

Die Figuren 11 und 12 zeigen eine erste Montagemöglichkeit des Arms 31 an den Längsschlitten 29 und 30, bei der die Längsschlitten 29 und 30 möglichst weit voneinander beabstandet an der Unterseite des Arms 31 befestigt sind. Auf diese Weise wird eine sehr stabile Anordnung des Arms 31 an der Längsführung 21 gewährleistet.

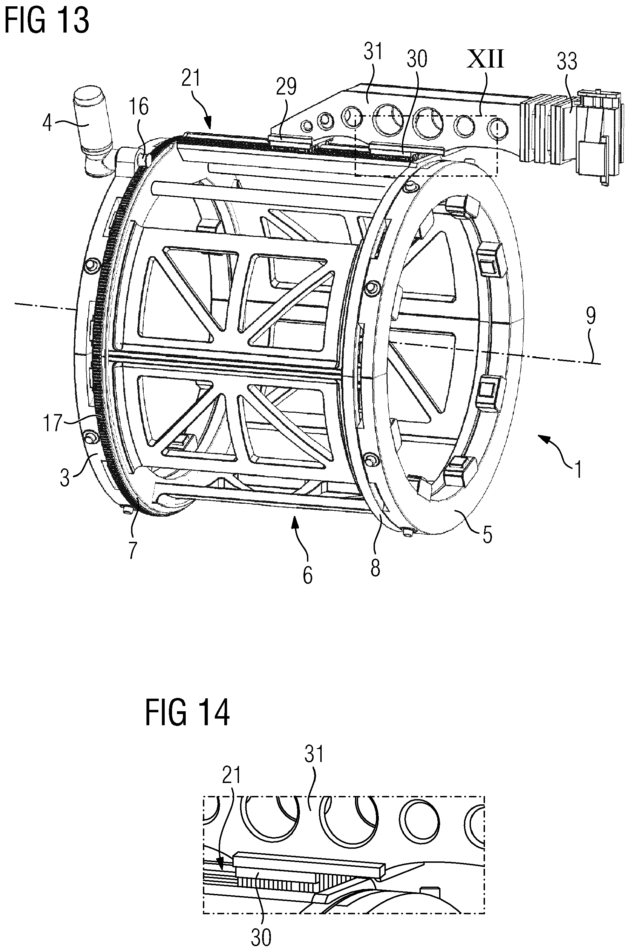

Die Figuren 13 und 14 zeigen eine zweite Montagemöglichkeit des Arms 31 an den Längsschlitten 29 und 30, bei der der benachbart zum zweiten Basisteil 5 angeordnete Längsschlitten 30 gegenüber der in den Figuren 11 und 12 dargestellten Anordnung in Richtung des anderen Längsschlittens 29 versetzt an der Unterseite des Arms 31 befestigt ist. Auf diese Weise wird der maximale Verfahrweg des Arms 31 verlängert, was allerdings Einbußen in der Stabilität nach sich zieht.

Zur Durchführung einer Bauteilbearbeitung unter Verwendung der erfindungsgemäßen Dreh- und/oder Rolliermaschine 1 wird diese in einem ersten Schritt ortsfest an einem zu bearbeitenden Bauteil 2 befestigt, indem die Basisteile 3 und 5 an diesem unter Verwendung der Befestigungsmittel 10 festgelegt werden. Die Anordnung der Maschine 1 an dem Bauteil 2 wird durch die Unterteilung der Maschine 1 in zwei Maschinenhälften erleichtert. Das Bauteil 2 kann dabei beispielsweise frei stehend im Raum angeordnet sein. Alternativ kann es aber auch durch eine nicht näher dargestellte Halteeinrichtung gehalten sein oder sich noch im montierten Zustand befinden.

Sobald die Maschine 1 an dem Bauteil 2 ortsfest montiert ist, erfolgt eine Feinjustage, um die Längsachse des Bauteils und die zentrale Achse 9 derart zueinander auszurichten, dass diese im Wesentlichen deckungsgleich sind. Zu diesem Zweck können an dem Rotationsteil 6 an geeigneten Positionen beispielsweise Messuhren befestigt werden, die dann zur Erfassung des Rundlaufs mit der Oberfläche des Bauteils 2 in Eingriff gebracht werden. Die Justage erfolgt dann durch entsprechendes manuelles Verstellen der Befestigungselemente 11.

Nach ordnungsgemäßer Ausrichtung der Maschine 1 kann diese wahlweise für die interne oder externe Bearbeitung gerüstet werden, wie es zuvor beschrieben wurde.

Während der Bearbeitung wird das Werkzeug 26, 36 an der Bearbeitungsstelle um das Bauteil 2 gedreht, indem das Rotationsteil 6 durch den Motor 4 angetrieben wird. Vorschub und Zustellung erfolgen über Betätigung des Längsschlittens 22 bzw. des Querschlittens 25, 34.

Die Dreh- und/oder Rolliermaschine 1 zeichnet sich insbesondere durch ihre kleinen Abmessungen und ihr geringes Eigengewicht aus, aufgrund derer sie einfach zu transportieren ist, was einen örtlich sehr flexiblen Einsatz bei geringem Energieaufwand ermöglicht. Darüber hinaus ist mit der Dreh- und/oder Rolliermaschine 1 eine hochpräzise Bauteilbearbeitung möglich. Die Maschine 1 eignet sich insbesondere zur Bearbeitung von im Wesentlichen rotationssymmetrisch ausgebildeten Bauteilen mit hohem Eigengewicht, wie beispielsweise zur Bearbeitung von entsprechenden Bauteilen einer in der Kraftwerkstechnik eingesetzten Turbine, zum Beispiel in Form eines Zugankers oder dergleichen.

Obwohl die Erfindung im Detail durch das bevorzugte Ausführungsbeispiel näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dreh- und/oder Rolliermaschine (1) mit
- einem Basisteil (3, 5), das zur ortsfesten Montage ausgelegt ist, insbesondere an einem zu bearbeitenden Bauteil (2),
- einem Antrieb (4),
- einem an dem Basisteil (3, 5) gehaltenen und unter Verwendung des Antriebs (4) relativ zu diesem um eine zentrale Achse (9) drehbaren Rotationsteil (6) und
- einem Werkzeughalter (26, 35), der an dem Rotationsteil (6) beabstandet von der zentralen Achse (9) angeordnet und zur Aufnahme eines Dreh- und/oder Rollierwerkzeugs (27, 36) ausgelegt ist,
wobei an dem Rotationsteil (6) ein parallel zur zentralen Achse (9) geführt bewegbarer Längsschlitten (22, 29, 30) und ein quer zur zentralen Achse geführt bewegbarer Querschlitten (25, 34) derart vorgesehen sind, dass der Werkzeughalter (26, 35) parallel und/oder quer zur zentralen Achse (9) bewegbar ist, wobei der Querschlitten (25) an dem Längsschlitten (22) bewegbar anordenbar ist und an dem Querschlitten (25) der Werkzeughalter (26) aufnehmbar ist,
**dadurch gekennzeichnet,**
**dass** an dem Längsschlitten (22, 29, 30) anstatt dem Querschlitten (25) ein das Basisteil (3, 5) übergreifender Arm (31) bewegbar angeordnet ist, wobei an der freien Endseite des Arms (31) der Querschlitten (34) angeordnet ist, an dem der Werkzeughalter (35) aufgenommen ist.

2. Maschine (1) nach Anspruch 1, **dadurch gekennzeichnet, dass** das Basisteil (1) Befestigungsmittel (10) aufweist, die derart ausgelegt sind, dass das Basisteil (3) an einem zu bearbeitenden Werkstück (2) ortsfest montierbar ist.

3. Maschine (1) nach Anspruch 2, **dadurch gekennzeichnet, dass** das Basisteil (3) ringförmig ausgebildet ist, und dass die Befestigungsmittel (10) gleichmäßig entlang des Ringdurchmessers angeordnet sind.

4. Maschine (1) nach einem der vorhergehenden Ansprüche, **dadurch gekennzeichnet, dass** diese ein zweites ortsfest montierbares Basisteil (5) aufweist, das insbesondere nach einem der Ansprüche 2 oder 3 ausgebildet ist, wobei das Rotationsteil (6) zwischen den beiden Basisteilen (3, 5) relativ zu diesen um die zentrale Achse (9) drehbar gehalten ist.

5. Maschine (1) nach Anspruch 4, **dadurch gekennzeichnet, dass** das Rotationsteil (6) zwei Gleitringe (7, 8), die über Führungselemente (13) jeweils mit einem Basisteil (3, 5) verbunden sind, und ein die beiden Gleitringe (7, 8) miteinander verbindendes, trommelartig ausgebildetes Zwischenteil (18) aufweist.

6. Maschine (1) nach Anspruch 5, **dadurch gekennzeichnet, dass** das Zwischenteil (18) zumindest teilweise als Rahmen ausgebildet ist.

7. Maschine (1) nach einem der vorhergehenden Ansprüche, **dadurch gekennzeichnet, dass** Rotationsteil (6) und Basisteil(e) (3, 5) geteilt ausgebildet sind, wobei sich die Teilungsebene (E) parallel zur zentralen Achse (9) erstreckt oder die zentrale Achse (9) einschließt.

8. Maschine (1) nach einem der vorhergehenden Ansprüche, **dadurch gekennzeichnet, dass** der Antrieb (4) an dem Basisteil (3) angeordnet ist und das Rotationsteil (6) über ein in eine rotationsteilseitige Verzahnung (17) eingreifendes Ritzel (16) antreibt.

9. Maschine (1) nach einem der vorhergehenden Ansprüche, **dadurch gekennzeichnet, dass** der Antrieb (4) ein Druckluftantrieb ist.

10. Maschine (1) nach einem der vorhergehenden Ansprüche, **dadurch gekennzeichnet, dass** der Längsschlitten (22) verschwenkbar ausgebildet ist, insbesondere verschwenkbar um einen Winkel von 90°.

11. Verfahren zum Drehen und/oder Rollieren eines Bauteils unter Verwendung einer Dreh- und/oder Rolliermaschine (1) nach einem der vorhergehenden Ansprüche, bei dem die Dreh- und/oder Rolliermaschine (1) ortsfest befestigt wird, insbesondere an einem zu bearbeitenden Bauteil (2), und ein Drehmeißel oder Rollierwerkzeug (27, 36) bei stillstehendem Bauteil (2) entlang einer Kreisbahn um eine zentrale Achse (9) gedreht und somit um das Bauteil (2) zwecks Materialabtrag bewegt wird.

12. Verfahren nach Anspruch 11, bei dem die Dreh- und/oder Rolliermaschine (1) an der Außenumfangsfläche des zu bearbeitenden Bauteils (2) befestigt wird.

13. Verfahren nach Anspruch 11 oder 12, bei dem die zentrale Achse (9) und die Längsachse des Bauteils (2) derart zueinander ausgerichtet werden, dass diese im Wesentlichen deckungsgleich sind.

14. Verfahren nach einem der Ansprüche 11 bis 13, bei dem ein Gasturbinenbauteil bearbeitet wird, insbesondere ein Zuganker einer Gasturbine.

## Claims

1. Turning and/or roller burnishing machine (1) comprising
- a base part (3, 5) which is designed for mounting in a stationary manner, in particular on a component (2) to be processed,
- a drive (4),
- a rotation part (6) which is held on the base part (3, 5) and is rotatable relative thereto about a central axis (9) using the drive (4), and
- a tool holder (26, 35) which is arranged on the rotation part (6) at a spacing from the central axis (9) and is designed for receiving a turning and/or roller burnishing tool (27, 36),
wherein a longitudinal slide (22, 29, 30) which is movable in a guided manner parallel to the central axis (9) and a transverse slide (25, 34) which is movable in a guided manner transversely to the central axis are provided on the rotation part (6) in such a way that the tool holder (26, 35) is movable parallel and/or transversely to the central axis (9), wherein the transverse slide (25) can be arranged movably on the longitudinal slide (22) and the tool holder (26) can be received on the transverse slide (25),
**characterized in that**
an arm (31) which engages over the base part (3, 5) is arranged movably on the longitudinal slide (22, 29, 30) instead of the transverse slide (25), wherein the transverse slide (34) on which the tool holder (35) is received is arranged on the free end side of the arm (31).

2. Machine (1) according to Claim 1, **characterized in that** the base part (1) has fastening means (10) which are designed in such a way that the base part (3) can be mounted in a stationary manner on a workpiece (2) to be processed.

3. Machine (1) according to Claim 2, **characterized in that** the base part (3) has a ring-shaped design, and **in that** the fastening means (10) are arranged uniformly along the ring diameter.

4. Machine (1) according to one of the preceding claims, **characterized in that** it has a second base part (5) which can be mounted in a stationary manner and which is designed in particular according to either of Claims 2 and 3, wherein the rotation part (6) is held between the two base parts (3, 5) so as to be rotatable relative thereto about the central axis (9).

5. Machine (1) according to Claim 4, **characterized in that** the rotation part (6) has two sliding rings (7, 8), which are respectively connected to a base part (3, 5) via guide elements (13), and an intermediate part (18) of drum-like design which interconnects the two sliding rings (7, 8).

6. Machine (1) according to Claim 5, **characterized in that** the intermediate part (18) is designed at least partially as a frame.

7. Machine (1) according to one of the preceding claims, **characterized in that** the rotation part (6) and base part(s) (3, 5) are of split design, wherein the parting plane (E) extends parallel to the central axis (9) or encloses the central axis (9).

8. Machine (1) according to one of the preceding claims, **characterized in that** the drive (4) is arranged on the base part (3) and drives the rotation part (6) via a pinion (16) which engages in a toothing (17) on the rotation part.

9. Machine (1) according to one of the preceding claims, **characterized in that** the drive (4) is a compressed air drive.

10. Machine (1) according to one of the preceding claims, **characterized in that** the longitudinal slide (22) is designed to be pivotable, in particular pivotable about an angle of 90°.

11. Method for turning and/or roller burnishing a component using a turning and/or roller burnishing machine (1) according to one of the preceding claims, in which the turning and/or roller burnishing machine (1) is fastened in a stationary manner, in particular on a component (2) to be processed, and, with the component (2) standing still, a turning chisel or roller burnishing tool (27, 36) is turned along a circular path about a central axis (9) and thus is moved around the component (2) for the purpose of material removal.

12. Method according to Claim 11, in which the turning and/or roller burnishing machine (1) is fastened to the outer peripheral surface of the component (2) to be processed.

13. Method according to Claim 11 or 12, in which the central axis (9) and the longitudinal axis of the component (2) are oriented with respect to one another in such a way that they are substantially congruent.

14. Method according to one of Claims 11 to 13, in which a gas turbine component is processed, in particular a tie rod of a gas turbine.

## Revendications

1. Machine (1) de façonnage au tour et/ou de galetage comprenant
- une partie (3, 5) de base, qui est conçue pour le montage à poste fixe, notamment sur une pièce (2) à usiner,
- un entraînement (4)
- une partie (6) de rotation maintenue sur la partie (3, 5) de base et, en utilisant l'entraînement (4), pouvant tourner par rapport à celle-ci autour d'un axe (9) central et
- un porte-outil (26, 35), qui est monté sur la partie (6) de rotation à distance de l'axe (9) central et qui est conçu pour la réception d'un outil (27, 36) de façonnage au tour et/ou de galetage,
dans laquelle il est prévu, sur la partie (6) de rotation, un chariot (22, 29, 30) longitudinal mobile, guidé parallèlement à l'axe (9) central et un chariot (25, 34) transversal mobile, guidé transversalement à l'axe central, de manière à pouvoir déplacer le porte-outil (26, 35) parallèlement et/ou transversalement à l'axe (9) central, le chariot (25) transversal pouvant être monté mobile sur le chariot (22) longitudinal et le porte-outil (26) pouvant être reçu sur le chariot (25) transversal,
**caractérisée en ce que**
un bras (31), enjambant la partie (3, 5) de base, est monté mobile sur le chariot (22, 29, 30) longitudinal au lieu du chariot (25) transversal, dans lequel, du côté de l'extrémité libre du bras (31), est monté le chariot (34), sur lequel est reçu le porte-outil (35).

2. Machine (1) suivant la revendication 1, **caractérisée en ce que** la partie (1) de base a des moyens (10) de fixation, qui sont conçus de manière à pouvoir monter à poste fixe la partie (3) de base sur une pièce (2) à usiner.

3. Machine (1) suivant la revendication 2, **caractérisée en ce que** la partie (3) de base est de forme annulaire et **en ce que** les moyens (10) de fixation sont disposés uniformément le long du diamètre de l'anneau.

4. Machine (1) suivant l'une des revendications précédentes, **caractérisée en ce qu'**elle a une deuxième partie (5) de base pouvant être montée à poste fixe, qui est constituée notamment suivant l'une des revendications 2 ou 3, la partie (6) de rotation étant maintenue entre les deux parties (3, 5) de base en pouvant tourner par rapport à celles-ci autour de l'axe (9) central.

5. Machine (1) suivant la revendication 4, **caractérisée en ce que** la partie (6) de rotation a deux bagues (7, 8) de friction, qui sont reliées chacune à une partie (3, 5) de base par des éléments (13) de guidage et une partie (18) intermédiaire reliant les deux bagues (7, 8) de friction entre elles et constituée à la manière d'un tambour.

6. Machine (1) suivant la revendication 5, **caractérisée en ce que** la partie (18) intermédiaire est constituée, au moins en partie, sous la forme d'un cadre.

7. Machine (1) suivant l'une des revendications précédentes, **caractérisée en ce que** la partie (6) de rotation et la ou les parties (3, 5) de base sont constituées de manière séparée, le plan (E) de séparation s'étendant parallèlement à l'axe (9) central ou passant par l'axe (9) central.

8. Machine (1) suivant l'une des revendications précédentes, **caractérisée en ce que** l'entraînement (4) est monté sur la partie (3) de base et entraîne la partie (6) de rotation par un pignon (16) engrenant dans une denture (17) du côté de la partie de rotation.

9. Machine (1) suivant l'une des revendications précédentes, **caractérisée en ce que** l'entraînement (4) est un entraînement à air comprimé.

10. Machine (1) suivant l'une des revendications précédentes, **caractérisée en ce que** le chariot (22) longitudinal est constitué pivotant, en pouvant notamment pivoter d'un angle de 90°.

11. Procédé de façonnage au tour et/ou de galetage d'une pièce en utilisant une machine (1) de façonnage au tour et/ou de galetage suivant l'une des revendications précédentes, dans lequel on fixe à poste fixe la machine (1) de façonnage au tour et/ou de galetage, notamment sur une pièce (2) à usiner, et on fait tourner un outil à tourner ou un outil (27, 36) de galetage, alors que la pièce (2) est à l'arrêt, le long d'une trajectoire autour d'un axe (9) central et on le déplace ainsi autour de la pièce (2) en vue d'enlever de la matière.

12. Procédé suivant la revendication 11, dans lequel on fixe la machine (1) de façonnage au tour et/ou de galetage sur la surface périphérique extérieure de la pièce (2) à usiner.

13. Procédé suivant la revendication 11 ou 12, dans lequel on oriente l'axe (9) central et l'axe longitudinal de la pièce (2) de manière à ce qu'ils coïncident sensiblement.

14. Procédé suivant la revendication 11 à 13, dans lequel on usine une pièce de turbine à gaz, notamment un tirant d'une turbine à gaz.
